# EUROPEAN PATENT APPLICATION

(11) **EP 3 643 188 A1**
(43) Date of publication of application: **29.04.2020**
(21) Application number: 19204830.4
(22) Date of filing: 23.10.2019
(51) Int. Cl.: A24F 40/53, A24F 40/60, A24F 40/65

(54) **ELECTRONIC ATOMIZING DEVICE, CONTROL METHOD AND SYSTEM THEREFOR**

(30) Priority: 23.10.2018 CN 201811240353; 03.06.2019 CN 201910475804
(71) Applicant: Shenzhen Smoore Technology Limited, Shenzhen, Guangdong 518102 (CN)
(72) Inventor: FANG, Weiming, Shenzhen, Guangdong 518102 (CN)
(74) Representative: Manitz Finsterwald Patent- und Rechtsanwaltspartnerschaft mbB

(57) **Abstract**

The present disclosure relates to an electronic atomizing device (10), comprising an atomizer (400); a locator (200) configured to acquire geographical location information of the electronic atomizing device; a communicator (300) configured to transmit the geographical location information to a mobile terminal (20) in response to receiving atomizing action starting information of the atomizer; and a controller (100) coupled to the atomizer, the locator and the communicator, the controller being configured to control the atomizer to work according to a control signal sent by the mobile terminal, and the control signal being associated with status information of the electronic atomizing device that is obtained by analyzing the geographical location information by the mobile terminal. The present disclosure further relates to a method of controlling an electronic atomizing device and a control system.

## Description

### TECHNICAL FIELD

The present disclosure relates to electronic atomizing devices.

### BACKGROUND

Electronic cigarettes are electronic products that mimic cigarettes, and can generate smoke like ordinary cigarette products to be smoked by users. Since the smoke generated by the electronic cigarette is free of tar and other substances harmful to human health, and smokers can be effectively helped to quit cigarettes through smoking the electronic cigarette, the electronic cigarette has been widely used as a substitute for cigarette paper products in daily life.

There are strict smoking control laws and regulations on cigarettes and tobacco all over the world, and there are specific non-smoking rules in public areas. However, there are no specific monitoring methods for the electronic cigarettes, so that the phenomenon of smoking electronic cigarettes may be seen everywhere, which seriously affects people's normal life and may even cause a safety accident. Therefore, the conventional electronic cigarette has a disadvantage of insufficient supervision.

### SUMMARY

In view of the above-mentioned problem that supervision of the conventional electronic cigarette is insufficient, an electronic atomizing device, a method of controlling an electronic atomizing device, and a control system are provided.

An electronic atomizing device includes: an atomizer; a locator configured to acquire geographical location information of the electronic atomizing device; a communicator configured to transmit the geographical location information to a mobile terminal in response to receiving atomizing action starting information of the atomizer; and a controller coupled to the atomizer, the locator and the communicator, the controller being configured to control the atomizer to work according to a control signal sent by the mobile terminal, and the control signal being associated with status information of the electronic atomizing device that is obtained by analyzing the geographical location information by the mobile terminal.

In an embodiment, the control signal comprises an atomization permission signal, the communicator being configured to receive the atomization permission signal sent by the mobile terminal, and the controller being configured to control the atomizer to perform atomization operation according to the atomization permission signal.

In an embodiment, the control signal comprises an atomization prohibition signal, the communicator being configured to receive the atomization prohibition signal sent by the mobile terminal, and the controller being configured to control the atomizer to stop atomization operation according to the atomization prohibition signal.

In an embodiment, the electronic atomizing device further comprises an alarm coupled to the controller and configured to prompt alarm information, and the control signal comprises an atomization prohibition signal, the communicator being configured to receive the atomization prohibition signal sent by the mobile terminal, and the controller being configured to control the alarm to prompt the alarm information according to the atomization prohibition signal.

In an embodiment, the locator is a GPS locator.

In an embodiment, the electronic atomizing device further comprises a detector coupled to the controller and configured to detect an atomizing action of the atomizer.

In an embodiment, the detector comprises an airflow sensor configured to detect change of airflow inside the electronic atomizing device.

In an embodiment, the detector comprises a voltage-current collector configured to detect change of current or voltage of the electronic atomizing device when the electronic atomizing device is turned on.

A method of controlling an electronic atomizing device includes: acquiring geographical location information of the electronic atomizing device; transmitting the geographical location information to a mobile terminal in response to receiving atomizing action starting information; and controlling the electronic atomizing device to work according to a control signal sent by the mobile terminal, the control signal being associated with status information of the electronic atomizing device that is obtained by analyzing the geographical location information by the mobile terminal.

In an embodiment, the control signal comprises an atomization permission signal, and the controlling the electronic atomizing device to work according to the control signal sent by the mobile terminal comprises: controlling the electronic atomizing device to perform atomization operation according to the atomization permission signal sent by the mobile terminal.

In an embodiment, the control signal comprises an atomization prohibition signal, and the controlling the electronic atomizing device to work according to the control signal sent by the mobile terminal comprises: controlling the electronic atomizing device to stop atomization operation according to the atomization prohibition signal sent by the mobile terminal.

In an embodiment, the control signal comprises an atomization prohibition signal, and the controlling the electronic atomizing device to work according to the control signal sent by the mobile terminal comprises: controlling the electronic atomizing device to prompt alarm information according to the atomization prohibition signal sent by the mobile terminal.

A control system includes a mobile terminal and the aforementioned electronic atomizing device, wherein the mobile terminal is communicatively coupled to the communicator.

In an embodiment, the mobile terminal is configured to receive geographical location information of the electronic atomizing device, and obtain status information of the electronic atomizing device by comparing the geographical location information with information in a predetermined non-smoking database, and send a corresponding control signal to the electronic atomizing device according to the status information.

In an embodiment, the mobile terminal is configured to send an atomization permission signal to the electronic atomizing device when the status information is an atomization permission status information, and send an atomization prohibition signal to the electronic atomizing device when the status information is an atomization prohibition status information.

In the aforementioned electronic atomizing device, method of controlling an electronic atomizing device, and control system, when the user uses the electronic atomizing device, the controller can obtain the geographical location information of the electronic atomizing device in real time, and send the corresponding geographical location information to the external mobile terminal through the communicator. After analyzing the geographical location information, the mobile terminal obtains the control signal corresponding to the geographical location information and sends the control signal to the controller, and the controller controls the electronic atomizing device according to the obtained control signal, such that the effective supervision of the electronic atomizing device is achieved, and the electronic atomizing device can be prevented from being used anywhere.

These and other objects, advantages, purposes and features will become apparent upon review of the following specification in conjunction with the drawings.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a flowchart of a method of controlling an electronic atomizing device in one embodiment.
FIG. 2 is a flowchart of a method of controlling an electronic atomizing device in another embodiment.
FIG. 3 is a flowchart of a method of controlling an electronic atomizing device in a further embodiment.
FIG. 4 is a block diagram of an electronic atomizing device in one embodiment.
FIG. 5 is a block diagram of an electronic atomizing device in another embodiment.
FIG. 6 is a block diagram of a control system for electronic atomizing device in one embodiment.

### DETAILED DESCRIPTION OF THE EMBODIMENTS

Embodiments of the invention are described more fully hereinafter with reference to the accompanying drawings. The various embodiments of the invention may, however, be embodied in many different forms and should not be construed as limited to the embodiments set forth herein. Rather, these embodiments are provided so that this disclosure will be thorough and complete, and will fully convey the scope of the invention to those skilled in the art.

A method of controlling an electronic atomizing device according to an embodiment includes steps as follows.

At step S100, geographical location information of the electronic atomizing device is acquired.

Specifically, the geographical location information of the electronic atomizing device can be acquired according to various manners. For example, it may be acquired directly through a locator provided inside the electronic atomizing device, or may be acquired through external devices (e.g., a mobile terminal) with the locating function carried by the user and then sent to a controller of the electronic atomizing device. In one embodiment, the electronic atomizing device itself is provided with a locator, and the controller of the electronic atomizing device can acquire the geographical location information of the electronic atomizing device through the locator. It should be noted that, in one embodiment, the operation of acquiring the geographical location information by the locator is performed in real time, i.e., the controller acquires the geographical location information of the electronic atomizing device through the locator at regular intervals and updates the geographical location information stored in storage. After receiving corresponding atomizing action starting information, the controller is able to send the last updated geographical location information to the mobile terminal immediately. In alternative embodiments, the controller actively accesses the locator to acquire the geographical location information of the electronic atomizing device only when the electronic atomizing device performs an atomizing related action. For example, when the controller receives the atomizing action starting information initiated by the user, the controller accesses the locator to acquire the geographical location information.

At step S200, the geographical location information is transmitted to a mobile terminal in response to receiving atomizing action starting information.

Specifically, the communicator of the electronic atomizing device is communicatively coupled to the mobile terminal, and bidirectional data transmission between the mobile terminal and the controller is performed via the communicator. When receiving the atomizing action starting information, the controller sends the acquired geographical location information to the communicator, and simultaneously sends a control signal to the communicator to control the communicator to communicate with the mobile terminal, such that the geographical location information can be transmitted to the mobile terminal in time. It should be noted that the type of the communicator is not limited hereto, i.e., the manner of communication between the mobile terminal and the electronic atomizing device is not limited hereto, as long as the data transmission between the electronic atomizing device and the mobile terminal can be efficiently performed. In one embodiment, for example, the communicator is a Bluetooth communicator.

It will be noted that the type of the atomizing action starting information is also not limited hereto, and may be information initiated by the user performing a smoking action when he smokes the electronic atomizing device, or may be information initiated by the user turning on a corresponding switch on the electronic atomizing device when the user is about to smoke the electronic atomizing device.

In one embodiment, the electronic atomizing device is provided with an airflow sensor, and the atomizing action starting information includes information indicating change of airflow inside the electronic atomizing device. For example, when the user smokes the electronic atomizing device, the airflow inside the electronic atomizing device changes, and the airflow sensor detects the change of the airflow and sends the information indicating the change of the airflow to the controller.

In another embodiment, the electronic atomizing device is provided with a voltage-current collector, and the atomizing action starting information includes information indicating change of current or voltage of the electronic atomizing device when the electronic atomizing device is turned on. For example, current or voltage of the electronic atomizing device changes at the moment when the user turns on a power switch of the electronic atomizing device, the voltage-current collector detects the change of the current or voltage, and sends the information indicating the change of the current or voltage to the controller.

At step S300, the electronic atomizing device is controlled to work according to a control signal sent by the mobile terminal.

Specifically, the control signal is associated with status information of the electronic atomizing device that is obtained by analyzing the geographical location information by the mobile terminal. After receiving the geographical location information transmitted by the communicator, the mobile terminal analyzes the geographical location information to obtain the status information corresponding to the geographical location information. Based on whether the electronic atomizing device is allowed to operate in a certain environment, the status information can include atomization permission status information and atomization prohibition status information. The atomization permission status information corresponds to a situation in which the electronic atomizing device is located outside a non-smoking area, while the atomization prohibition status information corresponds to a situation in which the electronic atomizing device is located within the non-smoking area. In one embodiment, the non-smoking area is an area where smoking is prohibited by the law.

It will be noted that, in one embodiment, the electronic atomizing device is an electronic cigarette. By providing the locator, the controller, the communicator, and the like in the electronic cigarette, it is possible to control the electronic cigarette according to the geographical location of the user when the user smokes the electronic cigarette, such that the occurrence of smoking the electronic cigarette everywhere is avoided, and the effective supervision of the use of the electronic cigarette is achieved.

It will be noted that, in one embodiment, the mobile terminal stores a predetermined non-smoking database therein, which is composed of all location information of the non-smoking area within a certain region. The mobile terminal analyzes the geographical location information by comparing the geographical location information with information in the predetermined non-smoking database. If the received geographical location information is consistent with information existed in the non-smoking database, it is indicated that the area where the electronic atomizing device is located is a non-smoking area, and the mobile terminal obtains the atomization prohibition status information accordingly, and then sends a corresponding control signal to the electronic atomizing device according to the atomization prohibition status information. If no information consistent with the received geographical location information exists in the non-smoking database, it is indicated that the electronic atomizing device is located in an area where atomization is permitted, and the mobile terminal obtains atomization permission status information correspondingly, and then sends a corresponding control signal to the electronic atomizing device according to the atomization permission status information.

It should be noted that, in one embodiment, the controller of the electronic atomizing device is also capable of obtaining a corresponding control signal according to the geographical location information. In other words, in this embodiment, the whole process of acquiring the geographical location information and obtaining the control signal according to the geographical location information is performed by the electronic atomizing device. The predetermined non-smoking database is provided in the controller of the electronic atomizing device, and when the geographical location information of the electronic atomizing device is acquired through the locator, the controller compares the geographical location information with information in the predetermined non-smoking database, obtains the status information corresponding to the geographical location information, and sends the corresponding control signal to other components of the electronic atomizing device according to the status information, such that the control of the electronic atomizing device is achieved.

Further, in one embodiment, in the case where the controller obtains the control signal directly according to the geographical location information, the electronic atomizing device is also provided with a communicator which is communicatively coupled to the mobile terminal. The mobile terminal can access a remote server to update the predetermined non-smoking database in the controller. It will be noted that, in another embodiment, the communicator inside the electronic atomizing device can be omitted, and the predetermined non-smoking database inside the controller does not have to be updated from time to time.

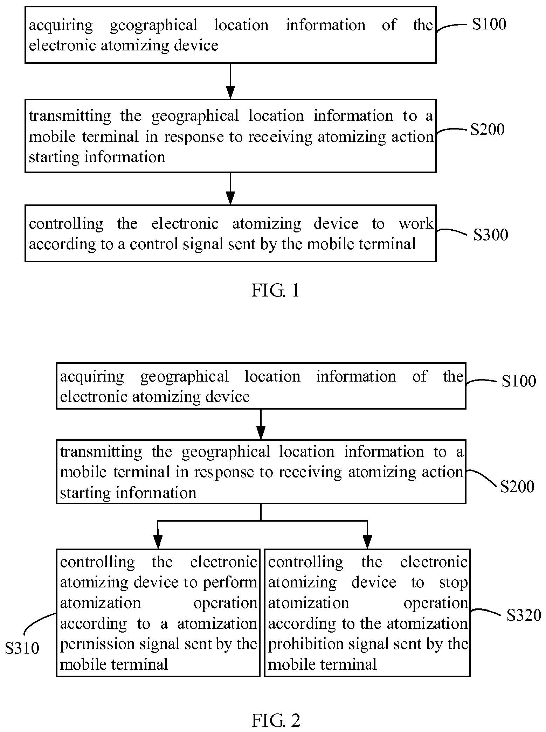

In one embodiment, referring to FIG. 2, the control signal includes an atomization permission signal, and step S300 further includes a step S310.

At step S310, the electronic atomizing device is controlled to perform atomization operation according to the atomization permission signal sent by the mobile terminal.

Specifically, after the mobile terminal compares the geographical location information sent by the communicator with information in the predetermined non-smoking database, when no information consistent with the geographical location information exists in the non-smoking database, the mobile terminal obtains the atomization permission status information, and then sends the corresponding atomization permission signal to the communicator according to the atomization permission status information. The atomization permission signal is transmitted via the communicator to the controller that controls the other components of the electronic atomizing device to perform the atomization operation. For example, when receiving the atomization permission signal, the controller controls an atomizer of the electronic atomizing device to generate smoke, so as to achieve the atomization operation of the electronic atomizing device.

In one embodiment, referring to FIG. 2, the control signal includes an atomization prohibition signal, and the step S300 further includes a step S320.

At step S320, the electronic atomizing device is controlled to stop atomization operation according to the atomization prohibition signal sent by the mobile terminal.

Similarly, after the mobile terminal compares the geographical location information sent by the communicator of the electronic atomizing device with information of the predetermined non-smoking database, when the received geographical location information is consistent with information existed in the non-smoking database, the mobile terminal obtains the atomization prohibition status information, and then sends a corresponding atomization prohibition signal to the communicator according to the atomization prohibition status information. The atomization prohibition signal is transmitted via the communicator to the controller that controls the other components of the electronic atomizing device to stop or interrupt the atomization operation. For example, when receiving the atomization prohibition signal, the controller turns off the power supply of the electronic atomizing device, so as to stop the atomization operation of the electronic atomizing device.

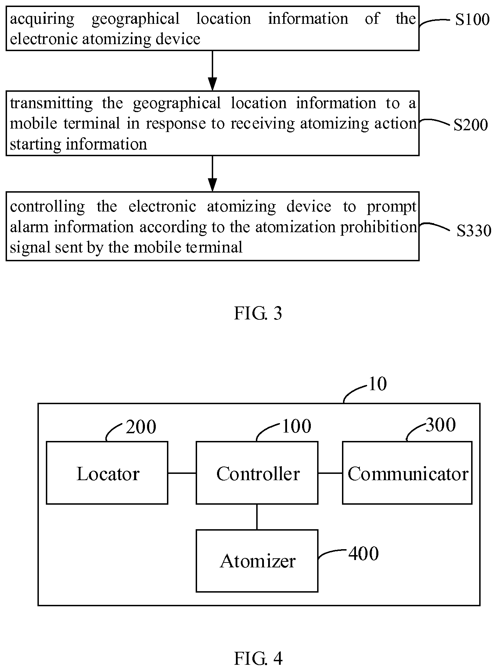

In one embodiment, referring to FIG. 3, the control signal includes an atomization prohibition signal, and the step S300 further includes a step S330.

At step S330, the electronic atomizing device is controlled to prompt alarm information according to the atomization prohibition signal sent by the mobile terminal.

Specifically, when receiving the atomization prohibition signal transmitted via the communicator, the controller controls an alarm of the electronic atomizing device to prompt alarm information to the user. In this embodiment, the controller does not directly interrupt the atomization operation, but alerts the user via the alarm that the electronic atomizing device is located in the non-smoking area, and the user can make a decision whether to stop using the electronic atomizing device.

It will be noted that the type of the alarm is not limited hereto, as long as the user can be timely alerted. For example, the alarm may include one or more of a signal indicator, a warning text displayed on a display screen, a voice alarm, a vibration alarm and the like. After the atomization prohibition signal is received, the electronic atomizing device may alert the user via any of the aforementioned alarm to facilitate the user to make a corresponding decision.

In the aforementioned method of controlling the electronic atomizing device, when the user uses the electronic atomizing device, the controller can obtain the geographical location information of the electronic atomizing device in real time, and send the corresponding geographical location information to the external mobile terminal through the communicator. After analyzing the geographical location information, the mobile terminal obtains the control signal corresponding to the geographical location information and sends the control signal to the controller, and the controller controls the electronic atomizing device according to the obtained control signal, such that the effective supervision of the electronic atomizing device is achieved, and the electronic atomizing device can be prevented from being used anywhere.

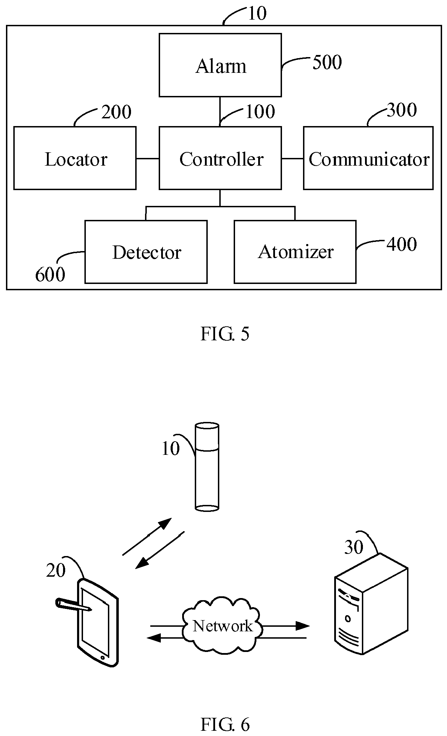

Referring to FIG. 4, an electronic atomizing device 10 according to an embodiment is provided, which includes an atomizer 400, a controller 100, a communicator 300, and a locator 200. The controller 100 is coupled to the atomizer 400, the locator 200, and the communicator 300. The locator 200 is configured to acquire geographical location information of the electronic atomizing device 10 and send it to the controller 100. The communicator 300 is configured to communicate between the controller 100 and a mobile terminal 20 (see FIG. 6). The controller 100 is configured to control the atomizer 400 to work according to a control signal sent by the mobile terminal 20.

Specifically, the geographical location information of the electronic atomizing device 10 can be acquired according to various manners. For example, it may acquire directly from the locator 200 inside the electronic atomizing device 10, or may acquire from external devices (e.g., the mobile terminal 20) with the locating function carried by the user. In one embodiment, the controller 100 of the electronic atomizing device 10 can acquire the geographical location information of the electronic atomizing device 10 through the locator 200. It will be noted that the type of the locator 200 is limited hereto, as long as the accurate location of the electronic atomizing device 10 can be obtained. In one embodiment, for example, the locator 200 is a GPS (Global Positioning System) locator.

It should be noted that, in one embodiment, the operation of acquiring the geographical location information from the locator is performed in real time, i.e., the controller 100 acquires the geographical location information of the electronic atomizing device 10 through the locator 200 at regular interval and updates the geographical location information stored in storage. After receiving corresponding atomizing action starting information, the controller 100 is able to send the last updated geographical location information to the mobile terminal 20 immediately. In alternative embodiments, the controller 100 actively accesses the locator 200 to acquire the geographical location information of the electronic atomizing device 10 only when the electronic atomizing device 10 performs an atomizing related action.

The communicator 300 is communicatively coupled to the mobile terminal 20, and bidirectional data transmission between the mobile terminal 20 and the controller 100 can be performed via the communicator 300. When receiving the atomizing action starting information, the controller 100 sends the acquired geographical location information to the communicator 300, and simultaneously sends a control signal to the communicator 300 to control the communicator 300 to communicate with the mobile terminal 20, such that the geographical location information can be transmitted to the mobile terminal 20 in time. It should be noted that the type of the communicator 300 is not limited hereto, i.e., the manner of communication between the mobile terminal 20 and the electronic atomizing device 10 is not limited hereto, as long as the data transmission between the electronic atomizing device 10 and the mobile terminal 20 can be efficiently performed. In one embodiment, for example, the communicator 300 is a Bluetooth communicator.

After receiving the geographical location information transmitted by the communicator 300, the mobile terminal 20 analyzes the geographical location information to obtain the status information corresponding to the geographical location information. Based on whether the electronic atomizing device 10 is allowed to operate in a certain environment, the status information can include atomization permission status information and atomization prohibition status information. The atomization permission status information corresponds to a situation in which the electronic atomizing device 10 is located outside a non-smoking area, while the atomization prohibition status information corresponds to a situation in which the electronic atomizing device 10 is located within the non-smoking area. In one embodiment, the non-smoking area is an area where smoking is prohibited by the law.

It will be noted that, in one embodiment, the mobile terminal 20 stores a predetermined non-smoking database, which composed all location information of the non-smoking area within a certain region. The mobile terminal 20 analyzes the geographical location information by comparing the geographical location information with information in the predetermined non-smoking database. If the received geographical location information is consistent with information existed in the non-smoking database, it is indicated that the area where the electronic atomizing device 10 is located is a non-smoking area, and the mobile terminal 20 obtains the atomization prohibition status information accordingly, and then sends a corresponding control signal to the electronic atomizing device 10 according to the atomization prohibition status information. If no information consistent with the received geographical location information exists in the non-smoking database, it is indicated that the electronic atomizing device 10 is located in an area where atomization is permitted, and the mobile terminal 20 obtains atomization permission status information correspondingly, and then sends a corresponding control signal to the electronic atomizing device 10 according to the atomization permission status information.

It should be noted that, in one embodiment, the controller 100 of the electronic atomizing device 10 is also capable of obtaining a corresponding control signal according to the geographical location information. In other words, in this embodiment, the whole process of acquiring the geographical location information and obtaining the control signal according to the geographical location information is performed by the electronic atomizing device 10. The predetermined non-smoking database is provided in the controller 100 of the electronic atomizing device 10, and when the geographical location information of the electronic atomizing device 10 is acquired through the locator 200, the controller 100 compares the geographical location information with information in the predetermined non-smoking database, obtains the status information corresponding to the geographical location information, and sends the corresponding control signal to other components of the electronic atomizing device 10 according to the status information, such that the control of the electronic atomizing device 10 is achieved.

Referring to FIG. 5, in one embodiment, the electronic atomizing device 10 further includes an atomizer 400 coupled to the controller 100.

Specifically, after the mobile terminal 20 compares the geographical location information sent by the communicator 300 with information in the predetermined non-smoking database, when no information consistent with the geographical location information exists in the non-smoking database, the mobile terminal 20 obtains the atomization permission status information, and then sends the corresponding atomization permission signal to the communicator 300 according to the atomization permission status information. The atomization permission signal is transmitted via the communicator 300 to the controller 100 that controls the other components of the electronic atomizing device 10 to perform the atomization operation. For example, when receiving the atomization permission signal, the controller 100 controls the atomizer 400 of the electronic atomizing device 10 to generate smoke, so as to achieve the atomization operation of the electronic atomizing device 10.

In one embodiment, the electronic atomizing device 10 further includes an alarm 500 coupled to the controller 100.

After the mobile terminal 20 compares the received geographical location information with information in the predetermined non-smoking database, when the received geographical location information is consistent with information existed in the non-smoking database, the mobile terminal 20 obtains the atomization prohibition status information and sends the corresponding atomization prohibition signal to the communicator 300 according to the atomization prohibition status information. Specifically, when the receiving the atomization prohibition signal transmitted via the communicator 300, the controller 100 controls the alarm 500 to prompt alarm information to the user. In this embodiment, the controller 100 does not directly interrupt the atomization operation, but alerts the user via the alarm 500 that the electronic atomizing device 10 is located in the non-smoking area, and the user can make a decision whether to stop using the electronic atomizing device 10. It will be noted that the type of the alarm 500 is not limited hereto as long as the user can be timely alerted. For example, the alarm may comprise one or more of a signal indicator, a warning text displayed on a display screen, a voice alarm, a vibration alarm and the like. After the atomization prohibition signal is received, the electronic atomizing device 10 may alert the user via any of the aforementioned alarm 500 to facilitate the user to make a corresponding decision.

In one embodiment, referring to FIG. 5, the electronic atomizing device 10 further includes a detector 600 coupled to the controller 100 for detecting an atomizing action.

Specifically, according to the detected object, the detector 600 may be an airflow sensor, or a voltage-current collector that detects change of the voltage or current of a switch. It will be noted that the type of the atomizing action starting information is also not limited hereto, and may be information initiated by the user performing a smoking action when he smokes the electronic atomizing device 10, or may be information initiated by the user turning on the corresponding switch on the electronic atomizing device 10 when the user is about to smoke the electronic atomizing device 10.

In one embodiment, the detector 600 is an airflow sensor, and the atomizing action starting information includes information indicating change of airflow inside the electronic atomizing device 10. For example, when the user smokes the electronic atomizing device 10, the airflow inside the electronic atomizing device 10 changes, and the airflow sensor detects the change of the airflow and sends the information indicating the change of the airflow to the controller 100.

In another embodiment, the detector 600 is a voltage-current collector, and the atomizing action starting information includes information indicating change of current or voltage of the electronic atomizing device 10 when the electronic atomizing device 10 is turned on. For example, current or voltage of the electronic atomizing device 10 changes at the moment when the user turns on a power switch of the electronic atomizing device 10, the voltage-current collector detects the change of the current or voltage, and sends the information indicating the change of the current or voltage to the controller 100.

In the aforementioned electronic atomizing device 10, when the user uses the electronic atomizing device 10, the controller 100 can obtain the geographical location information of the electronic atomizing device 10 in real time, and send the corresponding geographical location information to the external mobile terminal 20 through the communicator 300. After analyzing the geographical location information, the mobile terminal 20 obtains the control signal corresponding to the geographical location information and sends the control signal to the controller 100, and the controller 100 controls the electronic atomizing device 10 according to the obtained control signal, such that the effective supervision of the electronic atomizing device 10 is achieved, and the electronic atomizing device 10 can be prevented from being used anywhere.

Referring to FIG. 6, a control system is provided including a mobile terminal 20 and the aforementioned electronic atomizing device 10. The mobile terminal 20 is communicatively coupled to the communicator 300 of the electronic atomizing device 10.

Specifically, the electronic atomizing device 10 has the specific structure as described above. The communicator 300 is communicatively coupled to the mobile terminal 20, and bidirectional data transmission between the mobile terminal and the controller 100 is performed via the communicator 300. When receiving the atomizing action starting information, the controller 100 sends the acquired geographical location information to the communicator 300, and simultaneously sends a control signal to the communicator 300 to control the communicator 300 to communicate with the mobile terminal, such that the geographical location information can be transmitted to the mobile terminal 20 in time. It should be noted that the type of the mobile terminal 20 is not limited hereto, and may be a mobile phone, a tablet computer or the like.

In one embodiment, after receiving the geographical location information transmitted by the communicator 300, the mobile terminal 20 analyzes the geographical location information to obtain the status information corresponding to the geographical location information, and sends the corresponding control signal to the electronic atomizing device 10 according to the status information. Further, in one embodiment, when the status information is the atomization permission status information, the mobile terminal 20 sends the atomization permission signal to the electronic atomizing device 10, and when the status information is the atomization prohibition status information, the mobile terminal 20 sends the atomization prohibition signal to the electronic atomizing device 10. Based on whether the electronic atomizing device is allowed to operate in a certain environment, the status information can include atomization permission status information and atomization prohibition status information. The atomization permission status information corresponds to a situation in which the electronic atomizing device is located outside a non-smoking area, while the atomization prohibition status information corresponds to a situation in which the electronic atomizing device is located within the non-smoking area. In one embodiment, the non-smoking area is an area where smoking is prohibited by the law.

The mobile terminal 20 stores a predetermined non-smoking database therein, which is composed of all location information of the non-smoking area within a certain region. The mobile terminal 20 analyzes the geographical location information by comparing the geographical location information with information in the predetermined non-smoking database. If the received geographical location information is consistent with, it is indicated that the area where the electronic atomizing device 10 is located is a non-smoking area, and the mobile terminal 20 obtains the atomization prohibition status information accordingly, and then sends a corresponding control signal to the electronic atomizing device 10 according to the atomization prohibition status information. If no information consistent with the received geographical location information exists in the non-smoking database, it is indicated that the electronic atomizing device 10 is located in an area where atomization is permitted, and the mobile terminal 20 obtains atomization permission status information correspondingly, and then sends a corresponding control signal to the electronic atomizing device 10 according to the atomization permission status information.

Specifically, after the mobile terminal 20 compares the geographical location information sent by the communicator 300 with information in the predetermined non-smoking database, when no information consistent with the geographical location information exists in the non-smoking database, the mobile terminal 20 obtains the atomization permission status information, and then sends the corresponding atomization permission signal to the communicator 300 according to the atomization permission status information. The atomization permission signal is transmitted via the communicator 300 to the controller 100 that controls the other components of the electronic atomizing device 10 to perform the atomization operation. For example, when receiving the atomization permission signal, the controller 100 controls the atomizer 400 of the electronic atomizing device 10 to generate smoke, so as to achieve the atomization operation of the electronic atomizing device 10.

Similarly, after the mobile terminal 20 compares the geographical location information sent by the communicator 300 of the electronic atomizing device 10 with information of the predetermined non-smoking database, when the received geographical location information is consistent with information existed in the non-smoking database, the mobile terminal 20 obtains the atomization prohibition status information, and then sends a corresponding atomization prohibition signal to the communicator 300 according to the atomization prohibition status information. The atomization prohibition signal is transmitted via the communicator 300 to the controller 100 that controls the other components of the electronic atomizing device 10 to stop or interrupt the atomization operation. For example, when receiving the atomization prohibition signal, the controller 100 turns off the power supply of the electronic atomizing device 10, so as to stop the atomization operation of the electronic atomizing device 10.

Referring to FIG. 6, in one embodiment, the control system further includes a server 30 communicatively coupled to the mobile terminal 20.

Specifically, due to the continuous change of people's living environment, the number and location of non-smoking can be continuously updated due to the construction of public areas. Therefore, the mobile terminal 20 may also receive updated data sent by the server 30 and updates the non-smoking database in real time, such that the accuracy in analyzing the geographical location information can be effectively ensured.

In the aforementioned control system, when the user uses the electronic atomizing device 10, the controller 100 can obtain the geographical location information of the electronic atomizing device 10 in real time, and send the corresponding geographical location information to the external mobile terminal 20 through the communicator 300. After analyzing the geographical location information, the mobile terminal 20 obtains the control signal corresponding to the geographical location information and sends the control signal to the controller 100, and the controller 100 controls the electronic atomizing device 10 according to the obtained control signal, such that the effective supervision of the electronic atomizing device 10 is achieved, and the electronic atomizing device can be prevented from being used anywhere.

The foregoing respective technical features involved in the respective embodiments can be combined arbitrarily, for brevity, not all possible combinations of the respective technical features in the foregoing embodiments are described, however, to the extent they have no collision with each other, the combination of the respective technical features shall be considered to be within the scope of the description.

The foregoing implementations are merely specific the embodiment of the present disclosure, and are not intended to limit the protection scope of the present disclosure. It should be noted that any variation or replacement readily figured out by persons skilled in the art within the technical scope disclosed in the present disclosure shall all fall into the protection scope of the present disclosure. Therefore, the protection scope of the present disclosure shall be subject to the protection scope of the claims.

## Claims

1. An electronic atomizing device (10), comprising:
an atomizer (400);
a locator (200) configured to acquire geographical location information of the electronic atomizing device (10);
a communicator (300) configured to transmit the geographical location information to a mobile terminal (20) in response to receiving atomizing action starting information of the atomizer (400); and
a controller (100) coupled to the atomizer (400), the locator (200) and the communicator (300), wherein the controller (100) is configured to control the atomizer (400) to work according to a control signal sent by the mobile terminal (20), and the control signal is associated with status information of the electronic atomizing device (10) that is obtained by analyzing the geographical location information by the mobile terminal (20).

2. The electronic atomizing device (10) of claim 1, **characterized in that**, the control signal comprises an atomization permission signal, the communicator (300) being configured to receive the atomization permission signal sent by the mobile terminal (20), and the controller (100) being configured to control the atomizer (400) to perform atomization operation according to the atomization permission signal.

3. The electronic atomizing device (10) of claim 1 or 2, **characterized in that**, the control signal comprises an atomization prohibition signal, the communicator (300) being configured to receive the atomization prohibition signal sent by the mobile terminal (20), and the controller (100) being configured to control the atomizer (400) to stop atomization operation according to the atomization prohibition signal.

4. The electronic atomizing device (10) of any preceding claim, **characterized in that**, the electronic atomizing device (10) further comprises an alarm (500) coupled to the controller (100) and configured to prompt alarm information, and the control signal comprises an atomization prohibition signal, the communicator (300) being configured to receive the atomization prohibition signal sent by the mobile terminal (20), and the controller (100) being configured to control the alarm (500) to prompt the alarm information according to the atomization prohibition signal.

5. The electronic atomizing device (10) of any preceding claim, **characterized in that**, the locator (200) is a GPS locator.

6. The electronic atomizing device (10) of any preceding claim, **characterized in that**, the electronic atomizing device (10) further comprises a detector (600) coupled to the controller (100) and configured to detect an atomizing action of the atomizer (400).

7. The electronic atomizing device (10) of claim 6, **characterized in that**, the detector (600) comprises an airflow sensor configured to detect change of airflow inside the electronic atomizing device (10).

8. The electronic atomizing device (10) of claim 6, **characterized in that**, the detector (600) comprises a voltage-current collector configured to detect change of current or voltage of the electronic atomizing device (10) when the electronic atomizing device (10) is turned on.

9. A method of controlling an electronic atomizing device (10), comprising:
acquiring geographical location information of the electronic atomizing device (10);
transmitting the geographical location information to a mobile terminal (20) in response to receiving atomizing action starting information; and
controlling the electronic atomizing device (10) to work according to a control signal sent by the mobile terminal (20), wherein the control signal is associated with status information of the electronic atomizing device (10) that is obtained by analyzing the geographical location information by the mobile terminal (20).

10. The method of claim 9, **characterized in that**, the control signal comprises an atomization permission signal, and the controlling the electronic atomizing device (10) to work according to the control signal sent by the mobile terminal (20) comprises:
controlling the electronic atomizing device (10) to perform atomization operation according to the atomization permission signal sent by the mobile terminal (20).

11. The method of claim 9 or 10, **characterized in that**, the control signal comprises an atomization prohibition signal, and the controlling the electronic atomizing device (10) to work according to the control signal sent by the mobile terminal (20) comprises:
controlling the electronic atomizing device (10) to stop atomization operation according to the atomization prohibition signal sent by the mobile terminal (20).

12. The method of any one of claims 9 to 11, **characterized in that**, the control signal comprises an atomization prohibition signal, and the controlling the electronic atomizing device (10) to work according to the control signal sent by the mobile terminal (20) comprises:
controlling the electronic atomizing device (10) to prompt alarm information according to the atomization prohibition signal sent by the mobile terminal (20).

13. A control system, comprising:
a mobile terminal (20); and
an electronic atomizing device (10) of any one of claims 1 to 8, wherein the mobile terminal is communicatively coupled to the communicator (300).

14. The control system of claim 13, **characterized in that**, the mobile terminal (20) is configured to receive geographical location information of the electronic atomizing device (10), and obtain status information of the electronic atomizing device (10) by comparing the geographical location information with information in a predetermined non-smoking database, and send a corresponding control signal to the electronic atomizing device (10) according to the status information.

15. The control system of claim 14, **characterized in that**, the mobile terminal (20) is configured to send an atomization permission signal to the electronic atomizing device (10) when the status information is an atomization permission status information, and send an atomization prohibition signal to the electronic atomizing device (10) when the status information is an atomization prohibition status information.
